# EUROPÄISCHE PATENTSCHRIFT

(11) **EP 3 107 760 B1**
(45) Veröffentlichungstag und Bekanntmachung des Hinweises auf die Patenterteilung: **14.03.2018**
(21) Anmeldenummer: 15700294.0
(22) Anmeldetag: 13.01.2015
(51) Int. Cl.: B29C 45/14, B60Q 3/00, B60Q 3/10, B60R 13/02, B60Q 3/64, B60Q 3/54, B60Q 3/217, B29L 31/30

(54) **VERFAHREN ZUR HERSTELLUNG EINES MIT LICHT DURCHSTRAHLBAREN VERKLEIDUNGSTEILS SOWIE EIN LEUCHT- UND VERKLEIDUNGSTEIL**
METHOD FOR PRODUCING A LIGHT-TRANSMISSIVE TRIM PART AND LIGHTING AND TRIM PART
PROCÉDÉ DE FABRICATION D'UN REVÊTEMENT TRANSLUCIDE ET RÊVETEMENT TRANSLUCIDE

(30) Priorität: 19.02.2014 DE 102014203000
(43) Veröffentlichungstag der Anmeldung: 28.12.2016
(73) Patentinhaber: Volkswagen Aktiengesellschaft, 38440 Wolfsburg (DE)
(72) Erfinder: KEYDEL, Toralf, 38162 Destedt (DE)
(86) Internationale Anmeldenummer: PCT/EP2015/050458
(87) Internationale Veröffentlichungsnummer: WO 2015/124328

(56) Entgegenhaltungen:
- WO-A1-2010/034213
- WO-A1-2010/118795
- DE-A1- 4 408 446
- DE-A1- 19 926 143
- DE-A1-102007 009 583
- DE-A1-102007 011 586
- DE-A1-102007 029 716
- DE-A1-102012 000 479

## Beschreibung

Die Erfindung betrifft ein Verfahren zur Herstellung eines mit Licht durchstrahlbaren Verkleidungsteils für den Innenraum eines Kraftfahrzeuges, welches die Verfahrensschritte des Bereitstellens einer ersten Dekorationsfolie und einer zweiten, von der ersten Dekorationsfolie verschiedenen Dekorationsfolie in jeweils einem Werkzeug sowie des Thermoformens der ersten und zweiten Dekorationsfolie innerhalb der jeweiligen Werkzeuge umfasst. Ferner umfasst das Verfahren den Verfahrensschritt des Einlegens der ersten sowie der zweiten Dekorationsfolie in eine Spritzgussanlage, wobei die erste und die zweite Dekorationsfolie in einer vorbestimmten Anordnung zueinander positioniert sind. Die Erfindung betrifft ferner ein Leucht- und Verkleidungsteil für den Innenraum eines Kraftfahrzeuges, welches eine erste und eine zweite Dekorationsfolie sowie ein transparentes Basisteil umfasst.

Der Automobilbau ist zunehmend bestrebt, leistungsstarke und dennoch kostengünstige Bauteile zu fertigen und in Kraftfahrzeugen zu verbauen. Gleichzeitig wird mit der steigenden Komplexität des Aufbaus heutiger Automobile der in einem Kraftfahrzeug zur Verfügung stehende Bauraum immer knapper. Auch bei den Verkleidungsteilen sowie im Bereich Kraftfahrzeug-Ambientelicht spielen der begrenzte Bauraum sowie die Kosten insbesondere der Einzelteile eine große Rolle.

Aus der DE 10 2012 000 479 A1 ist ein beleuchtbares Bauteil für den Innenraum eines Fahrzeuges bekannt, welches ein zumindest teilweise lichtdurchlässig ausgebildetes Basiselement sowie ein Sichtelement umfasst, welches mit dem Basiselement verbunden ist und eine sichtbare Oberfläche des Bauteils bildet.

Ferner ist aus der DE 10 2011 119 534 A1 ein Verfahren zum Herstellen eines beleuchtbaren Bauteils für den Innenraum eines Fahrzeuges sowie ein Verfahren zum Bilden einer Beleuchtungsanordnung im Innenraum eines Fahrzeuges und ein beleuchtbares Bauteil für den Innenraum eines Fahrzeuges sowie eine Beleuchtungsanordnung im Innenraum eines Fahrzeuges bekannt.

Auch aus der WO 2011/103692 A1 ist ein beleuchtbares Bauteil mit einer Sichtseite, einem die Sichtseite umgebenden Rand und einer Rückseite bekannt, welches ein flächiges Dekorelement mit wenigstens einem lichtdurchlässigen Bereich und wenigstens einem lichtundurchlässigen Bereich sowie Beleuchtungsmittel zum Beleuchten des wenigstens einen lichtdurchlässigen Bereichs und wenigstens eine zwischen dem Dekorelement und dem Beleuchtungsmittel angeordnete lichtführende Schicht umfasst.

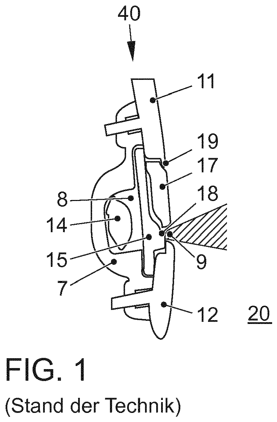

Figur 1 zeigt ein Beispiel eines Leucht- und Verkleidungsteils 40 des Standes der Technik im Querschnitt. Bei dem Leucht- und Verkleidungsteil 40 handelt es sich um einen Teil einer Türinnenverkleidung, die eine erste massive Dekorblende 11 und eine zweite massive Dekorblende 12 aufweist, auf welche ein Abschottungselement 7 aufgesteckt ist. In diesem Beispiel sind die beiden Dekorblenden 11, 12 als eigenständige Verkleidungsteile unter anderem zum Zwecke der mechanischen Stabilisierung in das Abschottungselement 7 eingesteckt. Die beiden Dekorblenden 11 und 12 können aber auch als ein eigenständiges, also zusammenhängendes Bauteil realisiert sein. Das Abschottungselement 7 ist geschwungen ausgeführt und erstreckt sich im Querschnitt über die gesamte Höhe des Leucht- und Verkleidungsteils 40 des Standes der Technik. In diesem Beispiel weist das Leucht- und Verkleidungsteil 40 ein erstes und ein zweites Lichtleitelement 14, 15 auf. Das erste Lichtleitelement 14 ist länglich ausgeführt und in einer in dem Abschottungselement 7 vorgesehenen Aussparung 8 angeordnet. Das zweite Lichtleitelement 15 weist eine Freiform mit plattenförmigem Grundkörper auf, ist vor dem ersten Lichtleitelement 14 angeordnet und zwischen dem Abschottungselement 7 und den Dekorblenden 11, 12 zum Zwecke der Fixierung unter anderem verklemmt. Die Form des zweiten Lichtleitelementes 15 ist an die Form der das zweite Lichtleitelement 15 umgebenden Teile im Wesentlichen formschlüssig angepasst. Ein wesentlicher Teil des zweiten Lichtleitelementes 15 wird in diesem Beispiel durch ein Chromeinlageteil 17 abgedeckt, welches die Dicke der ersten beziehungsweise zweiten Dekorblende 11, 12 aufweist und zwischen der ersten und der zweiten Dekorblende 11, 12 angeordnet ist. Das Chromeinlageteil 17 steht mit der ersten Dekorblende 11 in Kontakt und wird von einer aus der ersten Dekorblende 11 herausgebildeten Dekorblendenlippe 19 in einem Randbereich des Chromeinlageteils 17 überdeckt. Zwischen dem Chromeinlageteil 17 und der zweiten Dekorblende 12 besteht ein Freiraum beziehungsweise Freibereich, welcher von einer aus dem zweiten Lichtleitelement 15 herausgebildeten, an die Form von Chromeinlageteil 17 und zweiter Dekorblende 12 angepassten Nase 18 aufgefüllt wird. Ist das Leucht- und Verkleidungsteil 40 des Standes der Technik in der Tür eines Kraftfahrzeuges verbaut, so sind die erste und zweite Dekorblende 11, 12, das Chromeinlageteil 17 und die Nase 18 des zweiten Lichtleitelementes 15 von einem im Kraftfahrzeug beziehungsweise im Innenraum 20 des Kraftfahrzeuges befindlichen Betrachter sichtbar. Die Nase 18 des zweiten Lichtleitelementes 15 bildet ein Lichtfenster 9 beziehungsweise eine Streuscheibe 9 des Leucht- und Verkleidungsteils 40. Durch das erste Lichtleitelement 14 kann Licht in das Leucht- und Verkleidungsteil 40 geleitet beziehungsweise eingespeist werden. Dieses Licht wird von dem ersten Lichtleitelement 14 in das zweite Lichtleitelement 15 eingekoppelt und über das Lichtfenster 9 in den Innenraum 20 des Kraftfahrzeuges aus dem Leucht- und Verkleidungsteil 40 ausgekoppelt. Von dem ersten Lichtleitelement 14 in einer unerwünschten Richtung ausgekoppeltes Licht wird von dem Abschottungselement 7 abgefangen beziehungsweise ausgeblendet.

WO 2010/034213 A1 offenbart ein Verfahren zur Herstellung eines mit Licht durchscheinenden Verkleidungsteiles, bei dem eine erste und eine zweite Dekorationsfolie bereitgestellt werden, die in eine Spritzgussanlage eingebracht werden und gemeinsam hinterspritzt werden. Insbesondere offenbart dieses Dokument ein Verfahren zur Herstellung eines mit Licht durchstrahlbaren Verkleidungsteils, welches die folgenden Verfahrensschritte umfasst:
- Bereitstellen einer ersten Dekorationsfolie und einer zweiten, von der ersten Dekorationsfolie verschiedenen Dekorationsfolie;
- Einlegen (S3) der ersten sowie der zweiten Dekorationsfolie in eine Spritzgussanlage, wobei die erste und zweite Dekorationsfolie in einer vorbestimmten Anordnung, auf gegenüberliegenden Seiten des Verkleidungsteils, zueinander positioniert sind, umfassend den Schritt des gemeinsamen Hinterspritzens (S4) der ersten und zweiten Dekorationsfolie mit einem transparenten Material in genau einem Spritzvorgang.

Das zum Hinterspritzen verwendete Material sowie die Dekorfolien sind zumindest bereichsweise lichtdurchlässig. DE 44 08 446 A1 offenbart ein folienkaschiertes Kunststoff-Formteil sowieso Verfahren und Vorrichtung zu dessen Herstellung, bei dem mehrere Folien gleichzeitig hinterspritzt werden können.

DE 10 2007 029 716 A1 offenbart ein Kunststoffbauteil für ein Fahrzeug und Verfahren zu dessen Herstellung, bei der eine Folie mit einem Ausschnitt mit einer transparenten Kunststoffschicht hinterspritzt werden kann.

WO 2010/118795 A1 offenbart ein Dekorelement und Verfahren zu dessen Herstellung, bei dem eine zumindest teiltransparente Dekorfolie mit einer wenigstens teilweise transparenten Kunststoffschicht hinterspritzt wird.

Der Erfindung liegt die Aufgabe zugrunde, ein kostengünstiges sowie einfach fertigbares Licht- und Verkleidungsteil sowie ein Verfahren zur Herstellung eines mit Licht durchstrahlbaren Verkleidungsteils für den Innenraum eines Kraftfahrzeuges bereitzustellen, welches die besonders kostengünstige Herstellung eines Verkleidungsteils unter Verwendung einer verringerten Anzahl an Einzelteilen ermöglicht.

Erfindungsgemäß wird ein Verfahren zur Herstellung eines mit Licht durchstrahlbaren Verkleidungsteils für den Innenraum eines Kraftfahrzeuges zur Verfügung gestellt, welches die -3-folgenden Verfahrensschritte umfasst: Bereitstellen einer ersten Dekorationsfolie und einer zweiten, von der ersten Dekorationsfolie verschiedenen Dekorationsfolie in jeweils einem Werkzeug. Thermoformen der ersten und zweiten Dekorationsfolie innerhalb der jeweiligen Werkzeuge. Einlegen der ersten sowie der zweiten Dekorationsfolie in eine Spritzgussanlage, wobei die erste und zweite Dekorationsfolie in einer vorbestimmten Anordnung zueinander positioniert sind. Erfindungsgemäß umfasst das Verfahren den Schritt des gemeinsamen Hinterspritzens der ersten und zweiten Dekorationsfolie mit einem transparenten Material in genau einem Spritzvorgang.

In der vorbestimmten Anordnung ist zwischen der ersten und der zweiten Dekorationsfolie ein Freibereich vorgesehen, in welchem die erste und die zweite Dekorationsfolie nicht in Kontakt miteinander stehen und in welchem im Verfahrensschritt des gemeinsamen Hinterspritzens mit transparentem Material ein Lichtfenster gebildet wird. Bevorzugt entspricht das durch das transparente Material gebildete Lichtfenster einer Streuscheibe beziehungsweise fungiert das Lichtfenster als Streuscheibe. Ferner bevorzugt weist der durch das transparente Material aufgefüllte Freiraum beziehungsweise das Lichtfenster die Form eines Spaltes zwischen der ersten und der zweiten Dekorationsfolie auf. Bevorzugt ermöglicht das Lichtfenster das Durchstrahlen des hergestellten Verkleidungsteils mit Licht.

Der Vorteil eines derartigen Verfahrens liegt in der Möglichkeit, eine hochintegrative Dekorblende mit Ambientelicht, insbesondere eine Türverkleidung mit Ambientelicht, für den Innenraum des Kraftfahrzeuges äußerst kostengünstig und mit gegenüber dem Stand der Technik verringerter Anzahl an Einzelteilen herzustellen.

Bevorzugt ist die erste und/oder die zweite Dekorationsfolie mehrteilig. In einer derartigen Ausführungsform können sehr aufwendige beziehungsweise komplexe Verkleidungsteile einfach und kostengünstig realisiert werden.

Vorzugsweise umfasst der Schritt des Thermoformens ferner das Zurechtschneiden der ersten und/oder zweiten Dekorationsfolie. Bevorzugt umfasst der Schritt des Thermoformens also das Beschneiden der ersten und/oder zweiten Dekorationsfolie. In einer derartigen Ausführung können die Außenkonturen des Verkleidungsteils mit hoher Genauigkeit an eine gewünschte, vorbestimmte Form angepasst werden.

In einer bevorzugten Ausführungsform erfolgt das Zurechtschneiden der ersten und/oder zweiten Dekorationsfolie mittels eines Lasers. Mit einem Laserschnittverfahren lassen sich insbesondere Dekorationsfolien sehr genau und automatisiert schneiden.

Bevorzugt handelt es sich bei der ersten und/oder der zweiten Dekorationsfolie um jeweils eine ein- oder mehrteilige In-Mold-Labeling-Folie. Mit anderen Worten ausgedrückt handelt es sich bei der ersten und/oder der zweiten Dekorationsfolie bevorzugt um jeweils eine ein- oder mehrteilige IML-Folie, also um jeweils eine ein- oder mehrteilige In-Mold-Folie, beziehungsweise um jeweils eine ein- oder mehrteilige Folie, die mit einem In-Mold-Verfahren hergestellt wurde. Abermals mit anderen Worten ausgedrückt handelt es sich bei der ersten und/oder der zweiten Dekorationsfolie um jeweils eine ein- oder mehrteilige Folie für die Verarbeitung im Spritzgießwerkzeug.

Vorzugsweise erfolgt die Hinterspritzung der ersten und zweiten Dekorationsfolie im Schritt des Hinterspritzens mittels einer One-Shot-Hinterspritzung. Mit anderen Worten ausgedrückt erfolgt die Hinterspritzung der ersten und zweiten Dekorationsfolie im Schritt des Hinterspritzens innerhalb eines einzigen Spritzvorgangs. Abermals mit anderen Worten ausgedrückt erfolgt die Hinterspritzung der ersten und zweiten Dekorationsfolie im Schritt des Hinterspritzens mittels eines One-Shot-Verfahrens, also durch Spritzgießen in einem Fertigungsschritt. Bei einer derartigen Ausführung kann das Verkleidungsteil besonders einfach, schnell und kostengünstig hergestellt werden.

Ferner wird ein Leucht- und Verkleidungsteil für den Innenraum eines Kraftfahrzeuges zur Verfügung gestellt, welches eine erste Dekorationsfolie und eine zweite, von der ersten Dekorationsfolie verschiedene Dekorationsfolie umfasst. Ferner umfasst das Leucht- und Verkleidungsteil ein transparentes Basisteil, auf welchem die erste und die zweite Dekorationsfolie benachbart zueinander angeordnet sind, wobei zwischen der ersten und der zweiten Dekorationsfolie ein Freiraum liegt, in welchem durch das Basisteil ein Lichtfenster gebildet ist. Des Weiteren umfasst das Leucht- und Verkleidungsteil ein Abschottungselement, welches mit dem Basisteil verbindbar ist und eine in Richtung des Basisteils geöffnete Aussparung aufweist, in welcher ein Lichtleitelement vor dem Basisteil anordenbar ist. Erfindungsgemäß bildet das transparente Basisteil samt der ersten und der zweiten Dekorationsfolie ein mit Licht durchstrahlbares Verkleidungsteil, welches mittels eines erfindungsgemäßen Verfahrens hergestellt wurde. Der Vorteil eines derartigen Leucht- und Verkleidungsteils liegt in dessen einfacher sowie gegenüber dem Stand der Technik besonders kostengünstiger Herstellung. Des Weiteren ist die Anzahl an Einzelteilen bei einem derartigen Leucht- und Verkleidungsteil gegenüber dem Stand der Technik stark reduziert. Das Abschottungselement, welches im Stand der Technik ebenfalls zur mechanischen Stabilisierung des Leucht- und Verkleidungsteils benötigt wurde, wird bei dem erfindungsgemäß ausgeführten Leucht- und Verkleidungsteil lediglich für eine Abschottung des in einer unerwünschten Richtung aus dem Lichtleitelement austretenden Lichtes benötigt.

In einer bevorzugten Weiterentwicklung dieser Ausführungsform ist das Leucht- und Verkleidungsteil in eine Tür des Kraftfahrzeuges integrierbar und im in der Tür des Kraftfahrzeuges verbauten Zustand dazu ausgebildet, den Innenraum des Kraftfahrzeugs zu beleuchten. Bei einer derartigen Ausführung lässt sich die Gesamtzahl der bei der Fertigung beziehungsweise dem Zusammenbau einer Kraftfahrzeugtür benötigen Einzelteile stark reduzieren.

Vorzugsweise ist das Lichtfenster als Streuscheibe ausgebildet. Besonders bevorzugt ist das Basisteil einteilig ausgebildet. Durch die einteilige Ausführung des Basisteils werden Kosten und Fertigungszeit eingespart. Auch wird kein eigenes, das Lichtfenster zwischen der ersten und der zweiten Dekorationsfolie bildendes Einzelteil benötigt, da das Lichtfenster direkt durch das Basisteil gebildet wird. Ferner werden auch keine eigenen Teile für die Ausbildung von Dekorblenden benötigt, welche bei dem erfindungsgemäßen Leucht- und Verkleidungsteil durch die Kombination aus Basisteil sowie erster und zweiter Dekorationsfolie gebildet sind.

Ferner wird ein Kraftfahrzeug zur Verfügung gestellt, welches ein erfindungsgemäßes Leuchtund Verkleidungsteil aufweist, das im Innenraum des Kraftfahrzeugs angeordnet und dazu ausgebildet ist, den Innenraum des Kraftfahrzeugs zu beleuchten. Durch die zusätzliche Beleuchtung im Innenraum des Kraftfahrzeugs erhöht sich der Komfort für den Fahrer beziehungsweise Mitfahrer des Kraftfahrzeugs und die Sicherheit im Straßenverkehr.

Weitere bevorzugte Ausgestaltungen der Erfindung ergeben sich aus den übrigen, in den Unteransprüchen genannten Merkmalen.

Die verschiedenen, in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Es zeigen:
- Figur 1: ein Beispiel eines Leucht- und Verkleidungsteils des Standes der Technik;
- Figur 2: ein Ablaufdiagramm eines Ausführungsbeispiels eines erfindungsgemäßen Verfahrens;
- Figur 3: ein Ausführungsbeispiel eines erfindungsgemäßen Leucht- und Verkleidungsteils und
- Figur 4: ein Ausführungsbeispiel eines erfindungsgemäßen Kraftfahrzeugs.

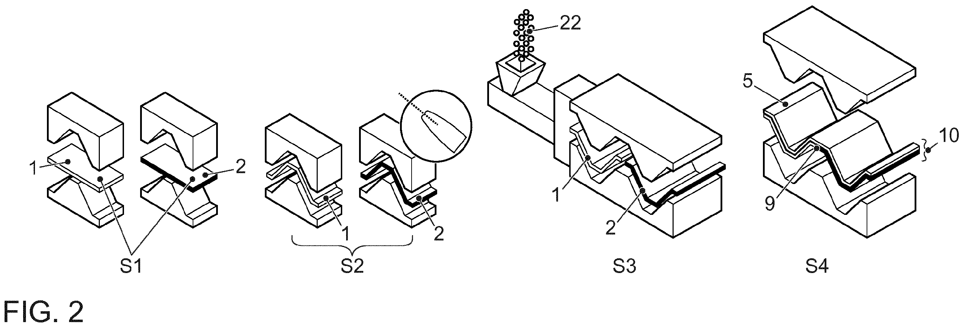

Figur 2 zeigt ein Ablaufdiagramm eines Ausführungsbeispiels eines erfindungsgemäßen Verfahrens zur Herstellung eines mit Licht durchstrahlbaren Verkleidungsteils 10 für den Innenraum 20 eines Kraftfahrzeuges, welches die folgenden Verfahrensschritte umfasst: Bereitstellen einer ersten Dekorationsfolie 1 und einer zweiten, von der ersten Dekorationsfolie 1 verschiedenen Dekorationsfolie 2 in jeweils einem Werkzeug S1. Bei der ersten Dekorationsfolie 1 handelt es sich in diesem Ausführungsbeispiel rein beispielhaft um eine mehrteilige (nicht dargestellt) so genannte In-Mold-Labeling-Folie. Es handelt sich bei der ersten Dekorationsfolie 1 also um ein mehrteiliges, so genanntes In-Mold-Label, das heißt um eine so genannte IML-Folie, welche in einem In-Mold-Verfahren verwandt und auch als IML-Etikett bezeichnet wird. Bei der zweiten Dekorationsfolie 2 handelt es sich in diesem Ausführungsbeispiel um eine einteilige In-Mold-Labeling-Folie, also um ein einteiliges In-Mold-Label, welches in einem In-Mold-Verfahren verwandt wird. Im zweiten Schritt S2 des erfindungsgemäßen Verfahrens werden die erste und die zweite Dekorationsfolie 1, 2 innerhalb ihrer jeweiligen Werkzeuge thermisch geformt. Mit anderen Worten ausgedrückt werden die erste und die zweite Dekorationsfolie 1, 2 unter einer erhöhten Temperatur in eine durch die Geometrie des jeweiligen Werkzeuges vorbestimmte Form gebracht. Zusätzlich dazu kann auch ein so genanntes blow molding beziehungsweise ein so genanntes injection molding zur Anwendung kommen. In diesem Ausführungsbeispiel umfasst der zweite Verfahrensschritt S2 des Thermoformens ferner das Zurechtschneiden der ersten sowie der zweiten Dekorationsfolie 1, 2 mittels eines Lasers. Das Zurechtschneiden beziehungsweise Beschneiden der Dekorationsfolien 1, 2 kann aber auch auf beliebige andere Art und Weise erfolgen.

Im sich anschließenden dritten Verfahrensschritt S3 werden die erste sowie die zweite Dekorationsfolie 1, 2 in eine Spritzgussanlage eingelegt, wobei die erste und zweite Dekorationsfolie 1, 2 in einer vorbestimmten Anordnung zueinander positioniert beziehungsweise ausgerichtet sind. In diesem Ausführungsbeispiel überlappt ein erster Teil der ersten Dekorationsfolie 1 ein erstes Ende der zweiten Dekorationsfolie 2 (nicht dargestellt). Ferner ist zwischen einem zweiten Teil der ersten Dekorationsfolie 1 und dem zweiten Ende der zweiten Dekorationsfolie 2 ein Freiraum beziehungsweise ein Freibereich vorgesehen, welcher sich spaltartig über die Breite der zweiten Dekorationsfolie 2 erstreckt. Des Weiteren ist in Figur 2 die Befüllung der Spritzgussanlage mit einem transparenten Granulat 22 dargestellt, welches in diesem Ausführungsbeispiel im nächsten, vierten Verfahrensschritt S4 zur Verwendung kommt. Im vierten Verfahrensschritt S4 werden die erste und die zweite Dekorationsfolie 1 und 2 mit einem transparenten Material, gewonnen durch eine Erhitzung des transparenten Granulats 22, in genau einem Spritzvorgang gemeinsam hinterspritzt. In diesem Ausführungsbeispiel erfolgt die Hinterspritzung im vierten Verfahrensschritt S4 rein beispielhaft in einer so genannten One-Shot-Hinterspritzung. Mit anderen Worten ausgedrückt erfolgt die Hinterspritzung der ersten und der zweiten Dekorationsfolie 1, 2 zeitgleich in ein und demselben Verfahrensschritt S4. Der bei der vorbestimmten Anordnung zwischen der ersten und der zweiten Dekorationsfolie 1, 2 gegebene Freibereich wird im vierten Verfahrensschritt S4 durch das transparente Material aufgefüllt, so dass in diesem Freibereich beziehungsweise Freiraum durch die Hinterspritzung ein Lichtfenster 9 gebildet wird. Im getrockneten Zustand bildet das transparente Material, mit welchem die erste und die zweite Dekorationsfolie 1, 2 hinterspritzt wurden, ein transparentes Basisteil 5 aus, welches die erste und die zweite Dekorationsfolie trägt.

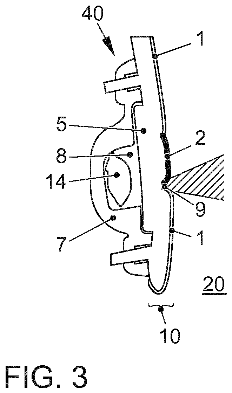

In Figur 3 ist ein Ausführungsbeispiel eines erfindungsgemäßen Leucht- und Verkleidungsteils 40 für den Innenraum 20 eines Kraftfahrzeuges in einem Querschnitt dargestellt. Das Leucht- und Verkleidungsteil 40 umfasst eine erste Dekorationsfolie 1 und eine zweite, von der ersten Dekorationsfolie 1 verschiedene Dekorationsfolie 2. Ferner umfasst das Leucht- und Verkleidungsteil 40 ein transparentes Basisteil 5, auf welchem die erste und die zweite Dekorationsfolie 1, 2 benachbart zueinander angeordnet sind, wobei zwischen der ersten und der zweiten Dekorationsfolie 1, 2 ein Freiraum liegt, in welchem durch das Basisteil 5 ein Lichtfenster 9 gebildet ist. Das Leucht- und Verkleidungsteil 40 weist ein Abschottungselement 7 auf, welches mit dem Basisteil 5 verbindbar ist und eine in Richtung des Basisteils 5 geöffnete Aussparung 8 aufweist, in welcher in diesem Ausführungsbeispiel ein erstes Lichtleitelement 14 vor dem Basisteil 5 angeordnet ist. In diesem Ausführungsbeispiel bildet das aus transparentem Material gespritzte Basisteil 5 ein zweites Lichtleitelement. Das erste Lichtleitelement 14 ist länglich ausgeführt und in die in diesem Ausführungsbeispiel u-förmige Aussparung 8 des Abschottungselementes 7 eingelegt. Das Abschottungselement 7 selbst ist opak ausgeführt und schirmt die Lichtauskopplung aus dem ersten Lichtleitelement 14 in den Bereichen beziehungsweise in den Richtungen ab, in denen kein Licht aus dem Leucht- und Verkleidungsteil 40 heraustreten beziehungsweise ausdringen soll. Die u-förmige Aussparung 8 des Abschottungselementes 7 ist in diesem Ausführungsbeispiel rein beispielhaft in Richtung des Basisteils 5 geöffnet, so dass aus dem ersten Lichtleitelement 14 ausgekoppeltes Licht in das Basisteil 5 eingekoppelt wird. Das transparente Basisteil 5 bildet samt der ersten und der zweiten Dekorationsfolie 1, 2 ein mit Licht durchstrahlbares Verkleidungsteil 10, welches mittels eines erfindungsgemäßen Verfahrens hergestellt wurde. Das Basisteil 5 des in Figur 3 dargestellten Leucht- und Verkleidungsteils 40 ist das Resultat des oben beschriebenen vierten Verfahrensschritts S4 des gemeinsamen Hinterspritzens der ersten und zweiten Dekorationsfolie 1, 2 mit einem transparenten Material in genau einem Spritzvorgang. Das Basisteil 5 wird in diesem Ausführungsbeispiel rein beispielhaft mit dem Abschottungselement 7 verclipst, ist also mit dem Abschottungselement 7 an zwei dazu vorgesehenen Stellen verrastet. Es können aber auch anderen Verbindungsarten beziehungsweise Verbindungsvorrichtungen zwischen Abschottungselement 7 und Basisteil 5 realisiert sein.

In diesem Ausführungsbeispiel ist die erste Dekorationsfolie 1 mehrteilig ausgeführt. Ein erster Teil der ersten Dekorationsfolie 1 überlappt ein erstes Ende der zweiten, einteiligen Dekorationsfolie 2. Ein zweites Ende der zweiten Dekorationsfolie 2 liegt beabstandet zu einem zweiten Teil der ersten Dekorationsfolie 1, so dass zwischen dem zweiten Ende der zweiten Dekorationsfolie 2 und dem zweiten Teil der ersten Dekorationsfolie 1 ein Freibereich, also ein Freiraum ausgebildet ist, an welchem das Basisteil 5 nicht durch eine der Dekorationsfolien 1, 2 verdeckt ist. In diesem Bereich ist durch das Basisteil 5 ein Lichtfenster 9 beziehungsweise eine Streuscheibe 9 gebildet, aus welcher in das Basisteil 5 eingekoppeltes Licht ausgekoppelt wird. Somit wird das durch das erste Lichtleitelement 14 in das Basisteil 5 ausgekoppelte Licht lediglich durch das Lichtfenster 9 aus dem Verkleidungsteil 10 beziehungsweise aus dem Basisteil 5 ausgekoppelt.

Im Vergleich mit dem in Figur 1 dargestellten Leucht- und Verkleidungsteil 40 des Standes der Technik erfüllen die erste und die zweite Dekorationsfolie 1, 2 in dem in Figur 3 dargestellten Ausführungsbeispiel optisch die Funktionen der ersten und zweiten Dekorblende 11, 12 sowie des Chromeinlageteils 17 des Leucht- und Verkleidungsteils 40 des Standes der Technik.

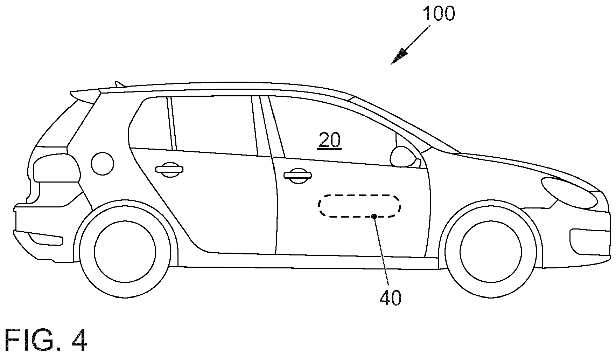

In Figur 4 ist ein Ausführungsbeispiel eines erfindungsgemäßen Kraftfahrzeugs 100 dargestellt, in dessen Innenraum 20 das in Figur 3 beschriebene Ausführungsbeispiel eines erfindungsgemäßen Leucht- und Verkleidungsteils 40 angeordnet ist. Das Leucht- und Verkleidungsteil 40 ist in Figur 4 lediglich über eine Strichlinie angedeutet, da es für einen äußeren Betrachter in einem im Kraftfahrzeug 100 verbauten Zustand nicht sichtbar ist. Das Leucht- und Verkleidungsteil 40 ist in diesem Ausführungsbeispiel des erfindungsgemäßen Kraftfahrzeugs 100 rein beispielhaft in der Tür des Kraftfahrzeugs 100 angeordnet, bildet also einen Teil der Innenverkleidung der Tür des erfindungsgemäßen Kraftfahrzeugs 100. Es können allerdings auch erfindungsgemäße Kraftfahrzeuge 100 realisiert sein, in welchen erfindungsgemäße Leucht- und Verkleidungsteile 40 auch in beliebigen anderen Positionen, beispielsweise in der Instrumententafel, im Kraftfahrzeughimmel, also in der Dachinnenfläche des Kraftfahrzeugs 100, im Heckbereich oder aber auch in beliebigen sonstigen Bereichen des Innenraums 20 des Kraftfahrzeuges 100 verbaut beziehungsweise angeordnet sind. In diesem Ausführungsbeispiel des erfindungsgemäßen Kraftfahrzeugs 100 dient das erfindungsgemäße Leucht- und Verkleidungsteil 40 der Beleuchtung des Sitzbereiches und des diesem Sitz zugeordneten Fußraumes eines der Frontsitze des Kraftfahrzeuges 100. Es können aber auch erfindungsgemäße Leucht- und Verkleidungsteile 40 zur Beleuchtung beliebiger sonstiger Bereiche des Innenraums 20 des Kraftfahrzeuges 100 realisiert sein. Auch können erfindungsgemäße Leucht- und Verkleidungsteile 40 in erfindungsgemäßen Kraftfahrzeugen 100 vorgesehen sein, welche von dem in Figur 3 dargestellten und zuvor beschriebenen Ausführungsbeispiel abweichen.

### Bezugszeichenliste

- 1: erste Dekorationsfolie
- 2: zweite Dekorationsfolie
- 5: Basisteil
- 7: Abschottungselement
- 8: Aussparung
- 9: Lichtfenster, Streuscheibe
- 11: erste Dekorblende
- 12: zweite Dekorblende
- 14: erstes Lichtleitelement
- 15: zweites Lichtleitelement
- 17: Chromeinlageteil
- 18: Nase
- 19: Dekorblendenlippe
- 20: Innenraum
- 22: transparentes Granulat
- 40: Leucht- und Verkleidungsteil
- 100: Kraftfahrzeug
- S1: erster Verfahrensschritt
- S2: zweiter Verfahrensschritt
- S3: dritter Verfahrensschritt
- S4: vierter Verfahrensschritt

## Patentansprüche

1. Verfahren zur Herstellung eines mit Licht durchstrahlbaren Verkleidungsteils (10) für den Innenraum (20) eines Kraftfahrzeuges (100), welches die folgenden Verfahrensschritte umfasst:
- Bereitstellen einer ersten Dekorationsfolie (1) und einer zweiten, von der ersten Dekorationsfolie (1) verschiedenen Dekorationsfolie (2) in jeweils einem Werkzeug (S1);
- Thermoformen (S2) der ersten und zweiten Dekorationsfolie (1, 2) innerhalb der jeweiligen Werkzeuge;
- Einlegen (S3) der ersten sowie der zweiten Dekorationsfolie (1, 2) in eine Spritzgussanlage, wobei die erste und zweite Dekorationsfolie (1, 2) in einer vorbestimmten Anordnung zueinander positioniert sind;
umfassend den Schritt des gemeinsamen Hinterspritzens (S4) der ersten und zweiten Dekorationsfolie (1, 2) mit einem transparenten Material in genau einem Spritzvorgang, wobei in der vorbestimmten Anordnung zwischen der ersten und der zweiten Dekorationsfolie (1, 2) ein Freibereich vorgesehen ist, in welchem die erste und die zweite Dekorationsfolie (1, 2) nicht in Kontakt miteinander stehen und in welchem im Verfahrensschritt des gemeinsamen Hinterspritzens (S4) mit transparentem Material ein Lichtfenster (9) gebildet wird.

2. Verfahren nach Anspruch 1, **dadurch gekennzeichnet, dass** der Schritt des Thermoformens (S2) ferner das Zurechtschneiden der ersten und/oder zweiten Dekorationsfolie (1, 2) umfasst.

3. Verfahren nach Anspruch 2, **dadurch gekennzeichnet, dass** das Zurechtschneiden der ersten und/oder zweiten Dekorationsfolie (1, 2) mittels eines Lasers erfolgt.

4. Verfahren nach einem der vorhergehenden Ansprüche, **dadurch gekennzeichnet, dass** die Hinterspritzung der ersten und zweiten Dekorationsfolie (1, 2) im Schritt des Hinterspritzens (S4) mittels einer One-Shot-Hinterspritzung erfolgt.

5. Leucht- und Verkleidungsteil (40) für den Innenraum (20) eines Kraftfahrzeuges (100), umfassend
- eine erste Dekorationsfolie (1),
- eine zweite, von der ersten Dekorationsfolie (1) verschiedene Dekorationsfolie (2);
- ein transparentes Basisteil (5), auf welchem die erste und die zweite Dekorationsfolie (1, 2) benachbart zueinander angeordnet sind, wobei zwischen der ersten und der zweiten Dekorationsfolie (1, 2) ein Freiraum liegt, in welchem durch das Basisteil (5) ein Lichtfenster (9) gebildet ist;
- ein Abschottungselement (7), welches mit dem Basisteil (5) verbindbar ist und eine in Richtung des Basisteils (5) geöffnete Aussparung (8) aufweist, in welcher ein Lichtleitelement (14) vor dem Basisteil (5) anordenbar ist, wobei das transparente Basisteil (5) samt der ersten und der zweiten Dekorationsfolie (1, 2) ein mit Licht durchstrahlbares Verkleidungsteil (10) bildet, welches mittels eines Verfahrens nach einem der Ansprüche 1 bis 4 hergestellt wurde.

6. Leucht- und Verkleidungsteil nach Anspruch 5, **dadurch gekennzeichnet, dass** das Lichtfenster (9) als Streuscheibe ausgebildet ist.

7. Leucht- und Verkleidungsteil nach Anspruch 5 oder 6, **dadurch gekennzeichnet, dass** das Basisteil (5) einteilig ausgebildet ist.

8. Kraftfahrzeug (100), **dadurch gekennzeichnet, dass** das Kraftfahrzeug (100) ein Leucht- und Verkleidungsteil (40) nach einem der Ansprüche 5 bis 7 aufweist, welches im Innenraum (20) des Kraftfahrzeugs (100) angeordnet und dazu ausgebildet ist, den Innenraum (20) des Kraftfahrzeugs (100) zu beleuchten.

## Claims

1. Method for producing a light-transmissive trim part (10) for the passenger compartment (20) of a motor vehicle (100), which comprises the following method steps:
- providing a first decorative film (1) and a second decorative film (2) that is different from the first decorative film (1), in each case in a mould (S1);
- thermoforming (S2) the first and second decorative films (1, 2) within the respective moulds;
- placing (S3) the first and second decorative films (1, 2) in an injection-moulding system, wherein the first and second decorative films (1, 2) are positioned in a predetermined arrangement in relation to one another;
comprising the step of joint in-mould lamination (S4) of the first and second decorative films (1, 2) with a transparent material in just one injection-moulding operation,
wherein a clearance in which the first and second decorative films (1, 2) are not in contact with one another and in which a light window (9) is formed with transparent material in the method step of the joint in-mould lamination (S4) is provided in the predetermined arrangement between the first and second decorative films (1, 2).

2. Method according to Claim 1, **characterized in that** the thermoforming step (S2) also comprises the cutting to size of the first and/or second decorative films (1, 2).

3. Method according to Claim 2, **characterized in that** the cutting to size of the first and/or second decorative films (1, 2) is performed by means of a laser.

4. Method according to one of the preceding claims, **characterized in that** the in-mould lamination of the first and second decorative films (1, 2) in the in-mould lamination step (S4) is performed by means of a one-shot in-mould lamination.

5. Lighting and trim part (40) for the passenger compartment (20) of a motor vehicle (100), comprising
- a first decorative film (1);
- a second decorative film (2) that is different from the first decorative film (1);
- a transparent base part (5), in which the first and second decorative films (1, 2) are arranged alongside one another, wherein a clearance in which a light window (9) is formed by the base part (5) lies between the first and second decorative films (1, 2);
- a shielding element (7), which can be connected to the base part (5) and has an aperture (8) which is open in the direction of the base part (5) and in which a light guiding element (14) can be arranged in front of the base part (5),
wherein the transparent base part (5) forms together with the first and second decorative films (1, 2) a light-transmissive trim part (10), produced by means of a method according to one of Claims 1 to 4.

6. Lighting and trim part according to Claim 5, **characterized in that** the light window (9) is formed as a lens.

7. Lighting and trim part according to Claim 5 or 6, **characterized in that** the base part (5) is formed as one part.

8. Motor vehicle (100), **characterized in that** the motor vehicle (100) comprises a lighting and trim part (40) according to one of Claims 5 to 7, which is arranged in the passenger compartment (20) of the motor vehicle (100) and is designed to illuminate the passenger compartment (20) of the motor vehicle (100).

## Revendications

1. Procédé de fabrication d'une pièce d'habillage (10) pouvant être traversée par la lumière pour l'habitacle (20) d'un véhicule automobile (100), qui comprend les étapes suivantes:
- préparer une première feuille de décoration (1) et une deuxième feuille de décoration (2), différente de la première feuille de décoration (1), chacune dans un outil (S1);
- former thermiquement (S2) la première et la deuxième feuilles de décoration (1, 2) à l'intérieur des outils respectifs;
- insérer (S3) la première ainsi que la deuxième feuilles de décoration (1, 2) dans une installation de moulage par pulvérisation, dans lequel la première et la deuxième feuilles de décoration (1, 2) sont positionnées selon un agencement prédéterminé l'une par rapport à l'autre;
comprenant l'étape de la pulvérisation arrière commune (S4) de la première et de la deuxième feuilles de décoration (1, 2) avec un matériau transparent en exactement une opération de pulvérisation,
dans lequel il est prévu, dans l'agencement prédéterminé entre la première et la deuxième feuilles de décoration (1, 2), une zone libre, dans laquelle la première et la deuxième feuilles de décoration (1, 2) ne sont pas en contact l'une avec l'autre et dans laquelle on forme une fenêtre lumineuse (9) dans l'étape de procédé de pulvérisation arrière commune (S4) avec un matériau transparent.

2. Procédé selon la revendication 1, **caractérisé en ce que** l'étape du formage thermique (S2) permet en outre le découpage de la première et/ou de la deuxième feuille de décoration (1, 2).

3. Procédé selon la revendication 2, **caractérisé en ce que** l'on effectue le découpage de la première et/ou de la deuxième feuille de décoration (1, 2) au moyen d'un laser.

4. Procédé selon l'une quelconque des revendications précédentes, **caractérisé en ce que** l'on effectue la pulvérisation arrière de la première et de la deuxième feuilles de décoration (1, 2) dans l'étape de pulvérisation arrière (S4) au moyen d'une pulvérisation arrière One-Shot.

5. Pièce d'éclairage et d'habillage (40) pour l'habitacle (20) d'un véhicule automobile (100), comprenant
- une première feuille de décoration (1),
- une deuxième feuille de décoration (2), différente de la première feuille de décoration (1);
- une pièce de base transparente (5), sur laquelle la première et la deuxième feuilles de décoration (1, 2) sont disposées à proximité l'une de l'autre, dans laquelle il se trouve entre la première et la deuxième feuilles de décoration (1, 2) un espace libre, dans lequel une fenêtre lumineuse (9) est formée par la pièce de base (5);
- un élément de cloisonnement (7), qui peut être relié à la pièce de base (5) et qui présente une découpe (8) ouverte en direction de la pièce de base (5), dans laquelle un élément conducteur de la lumière (14) peut être disposé devant la pièce de base (5), dans laquelle la pièce de base transparente (5) forme avec la première et la deuxième feuilles de décoration (1, 2) une pièce d'habillage (10) pouvant être traversée par la lumière, qui a été fabriquée au moyen d'un procédé selon l'une quelconque des revendications 1 à 4.

6. Pièce d'éclairage et d'habillage selon la revendication 5, **caractérisée en ce que** la fenêtre lumineuse (9) est formée par une vitre diffusante.

7. Pièce d'éclairage et d'habillage selon la revendication 5 ou 6, **caractérisée en ce que** la pièce de base (5) est réalisée en une seule pièce.

8. Véhicule automobile (100), **caractérisé en ce que** le véhicule automobile (100) présente une pièce d'éclairage et d'habillage (40) selon l'une quelconque des revendications 5 à 7, qui est disposée dans l'habitacle (20) du véhicule automobile (100) et qui est réalisée pour éclairer l'habitacle (20) du véhicule automobile (100).
